# EUROPEAN PATENT APPLICATION

(11) **EP 4 852 413 A1**
(43) Date of publication of application: **09.12.2026**
(21) Application number: 26179908.4
(22) Date of filing: 20.05.2026
(51) Int. Cl.: H04L 69/08, H04L 67/12, H04L 67/565, H04L 69/18, H04L 9/40, H04L 67/02

(54) **SYSTEMS AND METHODS TO PROVIDE SECURE REMOTE ACCESS TO INDUSTRIAL SYSTEMS**

(30) Priority: 05.06.2025 US 202519229571
(71) Applicant: Rockwell Automation Technologies, Inc., Mayfield Heights, OH 44124 (US)
(72) Inventor: Bennati, Luca, Mayfield Heights, OH, 44124 (US); Brocca, Tommaso, Mayfield Heights, OH, 44124 (US); Ognissanti, Andrea, Mayfield Heights, OH, 44124 (US); Rolandone, Fabio, Mayfield Heights, OH, 44124 (US)
(74) Representative: Grünecker Patent- und Rechtsanwälte PartG mbB

(57) **Abstract**

Systems and methods to provide secure remote access to industrial systems by implementing a universal virtual network computing (VNC) viewer solution. One method may include receiving a data packet from an industrial device using a first communication protocol of the industrial device. The method may include translating the data packet to be formatted in accordance with a second, different communication protocol. The method may include generating and providing an electronic message based on the data packet for display.

## Description

### BACKGROUND

This disclosure relates to industrial environments and platforms such as industrial automation systems or manufacturing environments. Industrial manufacturing environments may include computing and mechanical systems configured to implement an industrial process. In industrial automation environments, control systems are used to drive various operations along an industrial line. Control programs are developed by programmers in integrated design applications. The integrated design applications may include programming tools to design control schemes for the industrial manufacturing environments. The control programs are used by control systems like programmable logic controllers ("PLCs") to drive the industrial assets, devices, and sensors in an industrial process. The integrated design applications communicate with numerous systems within industrial manufacturing environments like PLCs and orchestration systems. Integrated design applications may also communicate with external systems. The numerous communication links may create security vulnerabilities in the integrated design applications.

The discussion above is merely provided for general background information and is not intended to be used as an aid in determining the scope of the claimed subject matter.

### SUMMARY

The following presents a simplified summary of the disclosed technology herein in order to provide a basic understanding of some aspects of the disclosed technology. This summary is not an extensive overview of the disclosed technology. It is intended neither to identify key or critical elements of the disclosed technology nor to delineate the scope of the disclosed technology. Its sole purpose is to present some concepts of the disclosed technology in a simplified form as a prelude to the more detailed description that is presented later.

The technology disclosed herein relates generally to industrial systems, and, more particularly, to a universal virtual networking computing (VNC) viewer solution.

The VNC protocol has historically been considered insecure due to several factors related to the authentication and encryption mechanisms implemented by the VNC protocol. As one example, the VNC protocol may implement a simple password-based authentication that implements a password that is often limited to 8 characters, which can be easily identified using brute-force. As another example, the VNC protocol lacks multi-factor authentication (MFA). For instance, traditional VNC implementations do not support MFA, making it easier for an unauthorized user to gain access should the unauthorized user obtain the password. As still another example, the VNC protocol lacks built-in encryption. For instance, many VNC implementations do not include built-in encryption for the data transmitted between a client and a server. This means that data, including the password, can be intercepted and read by anyone with access to the network. Some VNC versions offer optional encryption, but do not enabled the optional encryption by default. In such instances, a user must manually configure and enable encryption, which can lead to insecure setups if not done correctly. Additionally, in some instances, configuring encryption may not be available on low-power or obsolete devices.

The technology disclosed herein provides a technical solution to such technical problems. For instance, the technology disclosed herein provides a universal VNC viewer solution that solves the technical problems related to traditional VNC implementations. In some examples, the technology disclosed herein provides (or otherwise facilitates) secure remote access to industrial automation devices that enables modern encryption and authentication methods while maintaining compatibility with obsolete or low-power devices. For instance, in some configurations, the technology disclosed herein may provide secure remote access to industrial automation devices by translating VNC protocol data to one or more other computer communications protocol formats. In one specific example, the technology disclosed herein may translate VNC protocol data to a WebSocket format, and then to a plain HyperText Markup Language (HTML) format.

The technology disclosed herein may involve creating and implementing custom software to facilitate the secure remote access to industrial automation devices. As one specific example, the custom software may translate VNC protocol data to WebSocket format and then use the NoVNC library to get a HTML with JavaScript interface. This approach leverages modern web standards and encryption, ensuring secure remote access while maintaining compatibility with low-power devices and support for layerization or containerization.

The technology disclosed herein provides an advantageous technical solution. For example, the technology disclosed herein provides a unique approach to solving the technical problems of existing solutions as described herein. For instance, unlike traditional VNC or enhanced versions, the technical solution of the technology disclosed herein may translate VNC protocol data to WebSocket format and then to plain HTML. This unique approach leverages modern web technologies to ensure compatibility and security.

In some examples, the technical solution of the technology disclosed herein may be implemented using a layered architecture. For instance, the technology disclosed herein advantageously employ a layered architecture where each layer (e.g., VNC, WebSocket, HTML, etc.) serves a specific purpose, enhancing modularity and maintainability. Further, each block may be confined in a dedicated environment, which further reduces an attack surface.

As such, the technology disclosed herein allows for enhanced security. For instance, by translating VNC to WebSocket and then to HTML, the disclosed solution supports modern encryption and authentication methods, which addresses the security vulnerabilities of traditional VNC. Further, the disclosed solution ensures that data is encrypted from the client to the server, which may further prevent unauthorized access and data breaches.

Additionally, the technology disclosed herein allows for improved resource efficiency. For instance, the disclosed solution may be designed to be lightweight, which may make the disclosed solution suitable for low-power devices commonly used in industrial automation, unlike more resource-intensive alternatives, such as, e.g., remote desktop protocol (RDP) or secure shell (SSH). Further, the disclosed solution may be deployed to any device with various programming language support, such as, e.g., .NET.

Accordingly, in some examples, the technology described herein provides technical solution that implements a particular combination of functions (or functionalities), where such a particular combination addresses the security and compatibility issues associated with traditional VNC implementations while maintaining the lightweight nature for obsolete or low-power devices. As one specific example, by combining VNC, WebSocket, and HTML, the technology disclosed herein may leverage modern web standards and encryption to address the security and compatibility issues of traditional VNC implementations. Additionally, the technical solution of the technology disclosed herein may integrate secure remote access capabilities into existing human-machine interface (HMI) or supervisory control and data acquisition (SCADA) solutions (e.g., obsolete or legacy industrial devices). As such, the technical solution of the technology disclosed herein may improve performance via the lightweight nature of the solution, which ensures that the solution can run efficiently on low-power devices, which is a significant advantage over more resource-intensive alternatives, such as, e.g., RDP or SSH.

Additionally, the technology disclosed herein provides a cost-effective solution to the technical problems of traditional VNC implementations. For instance, the technology disclosed herein provides a technical solution that avoids the high costs associated with developing proprietary software or hardware solutions, which makes the solution more accessible to a broader range of users.

Accordingly, the technology disclosed herein may provide (or otherwise facilitate) secure remote access to industrial automation devices that enables modern encryption and authentication methods while maintaining compatibility with obsolete or low-power devices.

Some configurations provide an industrial system with remote access. The system may include an industrial device of the industrial system, the industrial device configured to perform functionality related to a process to be executed by the industrial system. The system may also include a computing device communicatively coupled to the industrial device. The computing device may include an electronic processor. The electronic processor may be configured to receive a first version of a data packet from the industrial device using a first communication protocol of the industrial device, where the first version of the data packet may be in a first format of the first communication protocol. The electronic processor may be configured to translate the first version of the data packet into a second version of the data packet, where the second version of the data packet may be in a second format of a second communication protocol, the second communication protocol different from the first communication protocol. The electronic processor may be configured to generate an electronic message based on the second version of the data packet. The electronic processor may be configured to provide the electronic message to a display device for display.

Some configurations provide a method for providing remote access to an industrial system. The method may include receiving, with an electronic processor, a first version of a data packet from an industrial device of the industrial system using a first communication protocol of the industrial device, where the first version of the data packet may be formatted in accordance with the first communication protocol. The method may also include translating, with the electronic processor, the first version of the data packet into a second version of the data packet, where the second version of the data packet may be formatted in accordance with a second communication protocol. The method may also include converting, with the electronic processor, the second version of the data packet into a third version of the data packet, where the third version of the data packet may be formatted in accordance with a markup language protocol. The method may also include generating, with the electronic processor, an electronic message based on the third version of the data packet. The method may also include providing, with the electronic processor, the electronic message to a display device for display.

Some configurations provide a non-transitory, computer-readable medium storing instructions that, when executed by an electronic processor, may perform a set of functions, the set of functions may include: receiving a first version of a data packet from an industrial device of an industrial system using a virtual computing network (VNC) protocol of the industrial device, where the first version of the data packet may be formatted in accordance with the VNC protocol, where the data packet may include information related to the industrial system; translating the first version of the data packet into a second version of the data packet, where the second version of the data packet may be formatted in accordance with a real-time communication protocol; converting the second version of the data packet into a third version of the data packet, where the third version of the data packet may be formatted in accordance with a markup language; generating, with the electronic processor, a graphical user interface (GUI) based on the third version of the data packet, where the GUI may indicate the information related to the industrial system; and providing, with the electronic processor, the GUI for display via a display device.

The foregoing and other aspects and advantages of the present disclosure will appear from the following description. In the description, reference is made to the accompanying drawings which form a part hereof, and in which there is shown by way of illustrations one or more embodiments of the present disclosure. Such configurations do not necessarily represent the full scope of the present disclosure, however, and reference is made therefore to the claims and herein for interpreting the scope of the present disclosure.

### BRIEF DESCRIPTION OF DRAWINGS

The present disclosure will be better understood and features, aspects and advantages other than those set forth above will become apparent when consideration is given to the following detailed description thereof. Such detailed description makes reference to the following drawings.
FIG. 1 schematically illustrates a system to provide remote access to industrial devices of an industrial system according to some configurations.
FIG. 2 schematically illustrates a computing device that implements a universal virtual network computing (VNC) viewer solution according to some configurations.
FIG. 3 schematically illustrates an example workflow of a universal VNC viewer solution according to some configurations.
FIG. 4 schematically illustrates another example workflow of a universal VNC viewer solution according to some configurations.
FIG. 5 schematically illustrates yet another example workflow of a universal VNC viewer solution according to some configurations.
FIG. 6 is a flowchart illustrating a method to provide remote access to industrial devices of an industrial system according to some configurations.

### DETAILED DESCRIPTION

As utilized herein, terms "component," "system," "controller," "device," "manager," and variants thereof are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server may be a component. One or more components may reside within a process and/or thread of execution and a component may be localized on one computer and/or distributed between two or more computers.

The disclosed technology is described with reference to the drawings, wherein like reference numerals are used to refer to like elements throughout. In the following description, for purposes of explanation, numerous specific details are set forth in order to provide a thorough understanding of the disclosed technology. It may be evident, however, that the disclosed technology may be practiced without these specific details. In other instances, well-known structures and devices are shown in block diagram form in order to facilitate describing the disclosed technology.

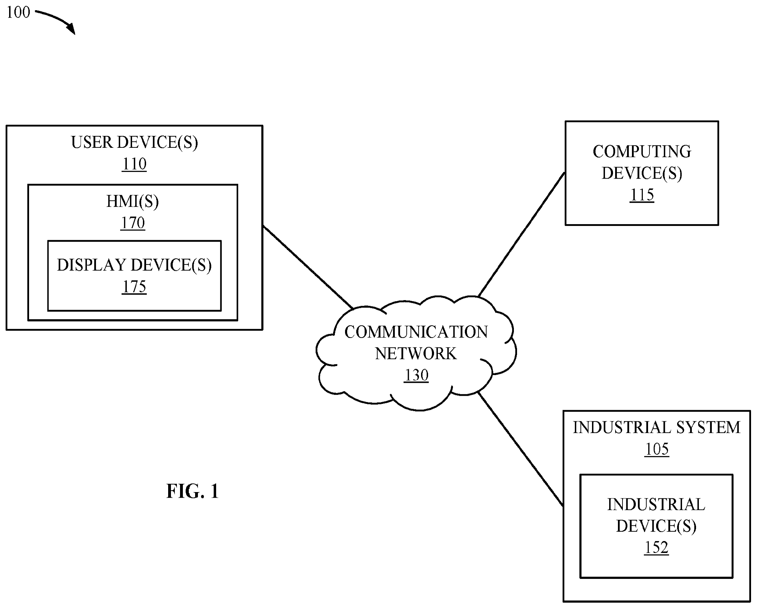

FIG. 1 schematically illustrates an example system 100 to provide remote access to industrial devices of industrial systems according to some configurations. In the illustrated example, the system 100 may include an industrial system 105, one or more user device(s) 110, one or more computing devices 115. In some configurations, the system 100 includes fewer, additional, or different components in different configurations than illustrated in FIG. 1. As one example, the system 100 may include multiple industrial systems 105, multiple user device(s) 110, multiple computing devices 115, or a combination thereof. As another example, one or more components of the system 100 may be combined into a single device. Alternatively, or in addition, in some configurations, the user device 110 or the computing device 110 may be included as part of the industrial system 105 (e.g., as a component of the industrial system 105). As one specific example, in some configurations, the computing device 110 may be an industrial device of the industrial system 105, such as, e.g., an HMI panel of the industrial system 105, as described in greater detail herein.

The industrial system 105, the user device 110, and the computing device 115 may communicate over one or more wired or wireless communication networks 130. Portions of the communication networks 130 may be implemented using a wide area network, such as the Internet, a local area network, such as BLUETOOTH^{®} or WI-FI^{®}, and combinations or derivatives thereof. Alternatively, or in addition, in some configurations, components of the system 100 may communicate directly as compared to through the communication network 130. Also, in some configurations, the components of the system 100 may communicate through one or more intermediary devices not illustrated in FIG. 1.

The industrial system 105 may be a manufacturing system, such as, e.g., an industrial automation system or the like. The industrial system 105 may be associated with (or located at) a facility or site. In some configurations, a facility or site may include multiple industrial systems 105 (e.g., a first industrial system, a second industrial system, a third industrial system, etc.). Accordingly, in some configurations, the industrial system 105 may be implemented at a facility. Alternatively, or in addition, in some configurations, the system 100 may include a first industrial system located at a first facility and a second industrial system located as a second facility different from the first facility. The industrial system 105 may be configured to perform one or more industrial processes, manufacturing processes, production processes, automation processes, or the like. In some configurations, the industrial system 105 may perform a production method that produces goods or products. As one example, the industrial system 105 may perform a vehicle manufacturing process to assemble or produce a vehicle (or various components thereof). As another example, the industrial system 105 may perform a food manufacturing process for making a food product. As yet another example, the industrial system 105 may perform a pharmaceutical manufacturing process for producing pharmaceuticals.

In the illustrated example, the industrial system 105 may include one or more industrial devices 152 (referred to herein collectively as "the industrial devices 152" and individually as "the industrial device 152"). The industrial device 152 may be a physical piece of equipment included in the industrial system 105. For example, an industrial device 152 may include a pump, a press, a conveyor, a valve, an industrial controller (e.g., a programmable logic controller ("PLC") or the like), a switch, a motor, a motion device, a sensor, a server, a database, a human-machine interface ("HMI") (or an HMI panel), a computing device, another piece of equipment that may be used in connection with an associated industrial process, task, or application of the industrial system 105, or the like. As noted herein, in some configurations, the industrial system 105 may include the computing device 115, the user device 110, or a combination thereof (e.g., as one of the industrial devices 152). As one example, the computing device 115 may be an HMI panel included in the industrial system 105. As another example, the computing device 115 may be an industrial personal computer (PC) included in the industrial system 105. As yet another example, the computing device 115 may be (or otherwise function as) a VNC server or platform that is included in the industrial system 105. For instance, in some configurations, the computing device 115 may be an industrial PC capable of virtualization (e.g., a virtual VNC server or platform).

As illustrated in FIG. 1, in some configurations, the system 100 may include the user device 110. The user device 110 may be a computing device, such as, e.g., a desktop computer, a laptop computer, a tablet computer, a terminal, a smart telephone, a smart television, a smart wearable, an industrial PC, or another suitable computing device that interfaces with, e.g., a user.

The user device 110 may be used by a user in relation to the universal virtual networking computing (VNC) viewer solution, as described herein. For instance, a user may use the user device 110 to access (or otherwise interact with) the industrial device(s) 152. For example, in some configurations, the user device 110 may facilitate (or otherwise provide) secure remote access to the industrial system 105 (or the industrial device(s) 152 thereof).

In some examples, a user may access or interact with the industrial system 105 (or the industrial device(s) 152 thereof) in order to interact with data related to the industrial system 105 (or the industrial device(s) 152 thereof) (referred to herein as industrial data). For example, industrial data may include data or information for the industrial system 105 (or the industrial device(s) 152 thereof) related to monitoring, troubleshooting, managing, configuring, operating, etc. As one example, the industrial data may be configuration data related to the industrial system 105. As another example, the industrial data may be monitoring data or operational data related to an industrial process or task performed (or presently being performed) by the industrial system 105. As yet another example, the industrial data may be diagnostic data for the industrial system 105 such that troubleshooting or maintenance of the industrial system 105 may be performed.

As one specific example, the user device 110 may be used by a line supervisor, such that the line supervisor may securely access one or more components of the industrial system 105 (e.g., the industrial device(s) 152) via, e.g., a facility or plant network. As another specific example, the user device 110 may be used by a remote technician, such that the remote technician may remotely and securely access the industrial system 105 (or the industrial device(s) 152 thereof) via, e.g., a cloud-based connection or network.

Accordingly, in some instances, the user device 110 may be a remote from the industrial system 105, a plant or facility of the industrial system 105, or the like. Alternatively, in some instances, the user device 110 may be on-premises or within a proximity of the industrial system 105 (or the industrial device(s) 152 thereof).

Although not illustrated in FIG. 1, the user device 110 may include similar components as the computing device 115, such as electronic processor (e.g., a microprocessor, an application-specific integrated circuit (ASIC), or another suitable electronic device), a memory (e.g., a non-transitory, computer-readable storage medium), a communication interface, such as a transceiver, for communicating over the communication network 130 and, optionally, one or more additional communication networks or connections, and one or more human machine interfaces. For example, to communicate with the computing device 115, the industrial system 105 (or one or more industrial devices 152 thereof), the user device 110 may store a browser application or a dedicated software application executable by an electronic processor. In some configurations, the user device 110 includes additional, fewer, or different components than the computing device 115. As one example, the user device 110 may facilitate access (or interaction with) the industrial system 105 (or the industrial device(s) 152 thereof) by providing one or more user interfaces (or graphical user interfaces (GUI)) via, e.g., a browser application. As such, in some instances, the technology disclosed herein may allow secure remote access to the industrial system 105 via a web browser (e.g., a webpage or site that provides a graphical representation of a universal VNC viewer solution as described herein).

As illustrated in FIG. 1, in some configurations, the user device 110 may include the HMI 170 for interacting with a user. The HMI 170 may include one or more input devices, one or more output devices, or a combination thereof. Accordingly, in some configurations, the HMI 170 allows a user to interact with (e.g., provide input to and receive output from) the user device 110. For example, the HMI 170 may include a keyboard, a cursor-control device (e.g., a mouse), a touch screen, a scroll ball, a mechanical button, a display device (e.g., a liquid crystal display ("LCD")), a printer, a speaker, a microphone, another type of input device, another type of output device, or a combination thereof. As illustrated in FIG. 1, in some configurations, the HMI 170 includes a display device 175. The display device 175 may be included in the same housing as the user device 110 or may communicate with the user device 110 over one or more wired or wireless connections. For example, in some configurations, the display device 175 is a touchscreen included in a laptop computer or a tablet computer. In other configurations, the display device 175 is a monitor, a television, or a projector coupled to a terminal, desktop computer, or the like via one or more cables. In some configurations, the user device 110 may output a graphical representation of the universal VNC viewer solution (e.g., as a GUI), as described herein, via the display device(s) 175, such that a user may interact with (e.g., view, edit, etc.) the data or information provided via the universal VNC viewer solution (e.g., the industrial data described herein).

As noted herein, the functionality (or a portion thereof) described herein as being performed by the computing device 115 may be performed by another device of the system 100, distributed among multiple devices of the system 100, combined with another component of the system 100, or a combination thereof. For example, in some configurations, the functionality (or a portion thereof) described as being performed by the computing device 115 may be performed by one or more of the user device 110, the industrial device(s) 152, another component of the system 100 or industrial system 105, or a combination thereof.

For example, in some configurations, data or information related to the industrial system 105 (e.g., the industrial data) may be provided (or otherwise transmitted) to a supervisor device (e.g., another computing device, user device, etc.). For instance, the industrial data may be recorded by an external device to be later processed or reviewed, such as, e.g., in scenarios where each user-related operation or application should be monitored or logged (e.g., gas and oil, food, power stations, etc.).

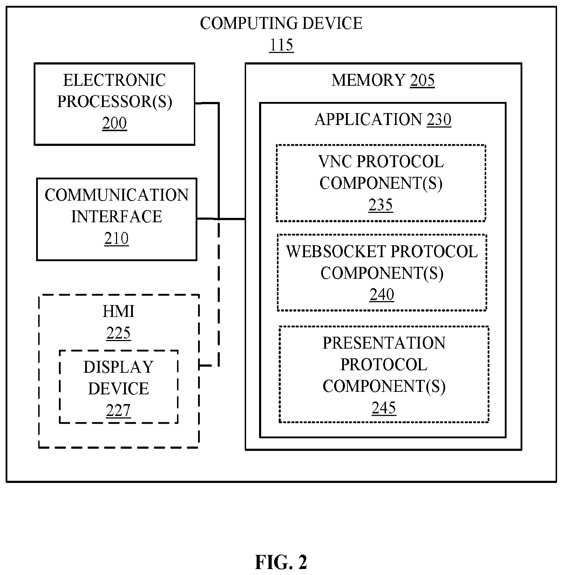

The system 100 may also include the computing device(s) 115, such as, e.g., a desktop computer, a laptop computer, a tablet computer, a terminal, a smart telephone, a smart television, a smart wearable, an industrial PC, or another suitable computing device. As illustrated in FIG. 2, the computing device 115 may include an electronic processor 200, a memory 205, and a communication interface 210. The electronic processor 200, the memory 205, and the communication interface 210 may communicate wirelessly, over one or more communication lines or buses, or a combination thereof. The computing device 115 may include additional, fewer, or different components than those illustrated in FIG. 2 in various configurations. The computing device 115 may also perform additional functionality other than the functionality described herein. Also, the functionality (or a portion thereof) described herein as being performed by the computing device 115 may be distributed among multiple devices (e.g., as part of a cloud service or cloud-computing environment), combined with another component of the system 100 (e.g., combined with the user device 110, one or more of the industrial device(s) 152, another component of the system 100, or the like), or a combination thereof. For example, in some configurations, the functionality (or a portion thereof) described as being performed by the computing device 115 may be performed by one or more of the user device 110, the industrial device(s) 152, another component of the system 100, another component of the industrial system 105, or a combination thereof.

As one example, in some configurations, the computing device 115 (or the functionality thereof) may be combined with (or otherwise implemented by) the industrial device 152. For instance, in some configurations, the functionality (or a portion thereof) described herein as being performed by the computing device 115 may be implemented by the industrial device 152. As one specific example, in some instances, the computing device 115 may be an HMI panel, an industrial PC, etc. of the industrial system 105. Alternatively, or in addition, in some examples, the computing device 115 may be separate or remote from the industrial system 105. As one specific example, the computing device 115 may be an HMI panel included in the industrial system 105 such that a line operator (having physical access to the HMI panel) may access with the industrial system 105 (or the industrial device(s) 152 thereof). As such, in some configurations, a user may access the industrial system 105 (or the industrial device(s) 152 thereof) using an industrial device 152 (e.g., as the computing device 115) of the industrial system 105. As used herein, accessing (or interacting with) one or more components of the industrial system 105 (e.g., one or more of the industrial device(s) 152) may include interacting with data (or data packets) related to the industrial system 105 (or the industrial device(s) 152 thereof) (e.g., the industrial data). In such configurations, the computing device 115 may include an HMI 225 (e.g., as similarly described herein with respect to the HMI 170 of the user device 110), a display device 227 (e.g., as similarly described herein with respect to the display device 175 of the user device 110), or a combination thereof.

The communication interface 210 may include a transceiver that communicates with the industrial system 105 (or the industrial device(s) 152 thereof), the user device 110, or a combination thereof over the communication network 130 and, optionally, one or more other communication networks or connections. In some configurations, the communication interface 210 enables the computing device 115 to communicate with the industrial system 105 (or the industrial device(s) 152 thereof), the user device 110, or a combination thereof over one or more wired or wireless connections. The electronic processor 200 may include a microprocessor, an ASIC, or another suitable electronic device for processing data, and the memory 205 includes a non-transitory, computer-readable storage medium. The electronic processor 200 is configured to retrieve instructions and data from the memory 205 and execute the instructions.

For example, as illustrated in FIG. 2, the memory 205 may store a universal VNC viewer application 230 (referred to herein as "the application 230"). The application 230 may be software applications executable by the electronic processor 200 in the example illustrated and as specifically discussed below, although a similarly purposed module may be implemented in other ways in other examples. The electronic processor 200 may execute the application 230 to facilitate (or otherwise execute) the universal VNC viewer solution described herein. For example, in some configurations, the electronic processor 200 may execute the application 230 to facilitate (or otherwise provide) secure remote access to the industrial device(s) 152 of the industrial system 105. As one example, the application 230 (when executed by the electronic processor 200) may facilitate the transmission of data packets or electronic communications (or messages) between various components of the system 100, such as, e.g., between the industrial device 152 and the user device 105. In some configurations, the application 230 (when executed by the electronic processor 200) may execute (or otherwise trigger) one or more scripts or functions that facilitate (or otherwise perform) translations, conversions, or transformations between various communication protocols or languages.

As one example, the application 230 (when executed by the electronic processor 200) may translate data or information to/from a VNC protocol (e.g., a first communication protocol). Alternatively, or in addition, the application 230 (when executed by the electronic processor 200) may translate data (or data packets) into a communication protocol (or format) different than the communication protocol (or format) that the data (or data packets) are received in. For example, when the data is formatted in accordance with a VNC protocol (e.g., as VNC industrial data), the application 230 may translate the VNC industrial data into a format consistent with or in accordance with another communication protocol, such as, e.g., a WebSocket protocol (or format), an HMTL protocol (or format), or the like. Accordingly, in some configurations, the application 230 (when executed by the electronic processor 200) may translate data into a variety of different communication protocols (or formats). As one example, the application 230 (when executed by the electronic processor 200) may translate data into a bidirectional communication protocol, a full-duplex communication protocol (e.g., that provides full-duplex communication over a single transmission control protocol (TCP) connection), a web-based communication protocol, a presentation protocol, etc. As one specific example, the application 230 (when executed by the electronic processor 200) may translate data into a WebSocket protocol (or format), such as, e.g., by executing a WebSocket script or function. As another specific example, the application 230 (when executed by the electronic processor 200) may translate data into a HTML protocol (or format), such as, e.g., by executing a script or function related to HTML or JTML with JavaScript interface.

As described herein, in some instances, the universal VNC viewer solution (e.g., as provided via the application 230) may be implemented using a layered architecture. For instance, as illustrated in the example of FIG. 2, the application 230 may include a VNC protocol component 235 (as a one layer), a WebSocket protocol component 240 (as another layer), and a presentation protocol component 245 (as yet another layer). Although the application 230 is illustrated in FIG. 2 as having three layers (e.g., a three-layered architecture), the application 230 may include additional, different, or fewer layers. For example, in some instances, the application 230 may implement the universal VNC viewer solution with two layers: the VNC protocol component 235 and the WebSocket protocol component 240; the VNC protocol component 235 and the presentation protocol component 245; or the like. As such, as noted herein, in some configurations, the technology disclosed herein may advantageously employ a layered architecture where each layer (e.g., the VNC protocol component 235, the WebSocket protocol component 240, the presentation protocol component 245 (e.g., an HTML format or protocol), etc.) serves a specific purpose, enhancing modularity and maintainability. Further, each block may be confined in a dedicated environment, which further reduces an attack surface.

As described in greater detail herein, each layer of the universal VNC viewer solution (e.g., as provided via the application 230) may execute (or otherwise perform) a translation between various protocols (e.g., VNC, WebSocket, HTML, etc.). For example, in some configurations, the VNC protocol component 235 may translate data (e.g., data packets) to or from VNC protocol (or format). In some configurations, the WebSocket protocol component 240 may translate data (e.g., data packets) to or from WebSocket protocol (or format). In some configurations, the presentation protocol component 245 may translate data (e.g., data packets) to or from a presentation protocol (or format), such as, e.g., an HTML format (such that the data or data packets may be presented to a user via a webpage or website, as described herein). In some configurations, the VNC protocol component 235, the WebSocket protocol component 240, the presentation protocol component 245, or a combination thereof may be a script (or a set of executable instructions).

As illustrated in FIG. 2, in some configurations, the application 230 may be included in the memory 205 of the computing device 115. However, in some configurations, the application 230 may be included in a separate device accessible by the computing device 115 (included in the computing device 115 or external to the computing device 115). For example, the application 230 (or a portion thereof) may be stored at the user device 110, the industrial device(s) 105, another component of the system 100, or the like. As described in greater detail herein, in some examples, the application 230 (or portion(s) thereof) may be stored on one or more of the industrial devices 105 (such as, e.g., when the computing device 115 is implemented as an HMI, an HMI panel, or industrial PC of the industrial system 105).

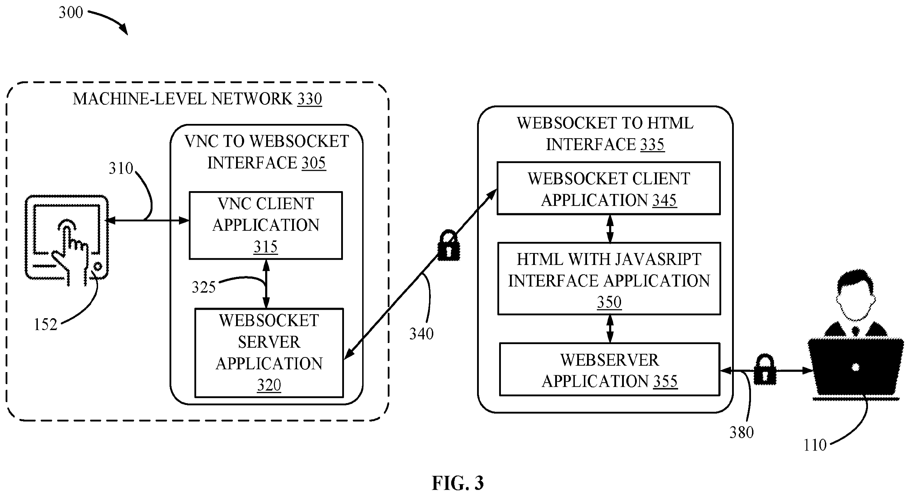

FIG. 3 schematically illustrates an example workflow diagram 300 of the universal VNC viewer solution in accordance with some configurations. In the example of FIG. 3, the workflow diagram 300 illustrates the industrial device 152 as an HMI or HMI panel of the industrial system 105. The industrial device 152 may provide (or otherwise transmit) data (e.g., as one or more data packets) to a VNC to WebSocket interface 305 over a first communication connection 310. In some instances, the VNC to WebSocket interface 305 may be (or otherwise implemented by) a computing device (e.g., the computing device 115). The data transmitted using the first communication network 310 may be transmitted pursuant to (or in accordance with) a VNC protocol. For instance, the data transmitted from the industrial device 152 to the VNC to WebSocket interface 305 may be industrial data specifically formatted for transmission via the VNC protocol (also referred to herein as VNC industrial data). In the example of FIG. 3, a VNC client application 315 may receive the VNC industrial data from the industrial device 152 via the first communication connection 310. In some examples, the VNC client application 315 may be the VNC protocol component 235 of FIG. 2. The VNC client application 315 (e.g., the VNC protocol component 235) may translate (or transform) data to or from VNC formatted data (e.g., the VNC industrial data). In the example of FIG. 3, the VNC client application 315 may convert the VNC industrial data into WebSocket industrial data. Converting the industrial data (e.g., the VNC industrial data) into WebSocket industrial data may facilitate (or otherwise result in) the encryption of the industrial data.

The VNC client application 315 may transmit (or otherwise provide) the WebSocket industrial data to a WebSocket server application 320 (e.g., similar to the WebSocket protocol component(s) 240 of FIG. 2) via a second communication connection 325. As illustrated in FIG. 3, the first communication connection 310 and the second communication connection 325 may not be secure communication connections (e.g., not encrypted communication connections) such that communication occurring over those connections are unencrypted (or unsecure) communications. For instance, the industrial device 152 and the VNC to WebSocket interface 305 may be included in a machine-level network 330. The machine-level network 305 may be an unsecure or unencrypted network. The WebSocket server application 320 may transmit the WebSocket industrial data to a WebSocket to HTML interface 335 via a third communication connection 340, which, as illustrated in FIG. 3, may be a secured (or encrypted) connection. In some examples, the third communication connection 340 may be (or otherwise included in) an open network. In some instances, the WebSocket to HTML interface 335 may be (or otherwise implemented by) a computing device (e.g., the computing device 115). For example, the machine-level network 330 may be a closed network, accessible by devices proximate to one another, communicatively coupled via a wired connection, etc.

The WebSocket to HTML interface 335 may include a WebSocket client application 345 (e.g., similar to the WebSocket protocol component(s) 240 of FIG. 2), an HTML with JavaScript interface application 350 (e.g., similar to the presentation protocol component(s) 245 of FIG. 2), and a webserver application 355. For instance, in some cases, the WebSocket to HTML interface 335 may include one or more types of scripts (e.g., WebSocket Client, HTML + JavaScript (JS), WebSocket + Secure Socket Layers (SSL), etc.). The WebSocket to HTML interface 335 (using one or more of the applications therein) may receive the WebSocket industrial data and facilitate the transformation (or translation) of the WebSocket industrial data into an HTML format with JavaScript interface such that the industrial data may be provided to the user device 110. The industrial device may be provided to the user device 110 over a fourth communication connection 380, which, as illustrated in FIG. 3, may be a secure (or encrypted) connection. In some examples, the fourth communication connection 380 may be (or otherwise included in) an open network.

In some configurations, the WebSocket to HTML interface 335 may utilize one or more script libraries accessible by the WebSocket client application 345, the HTML with JS interface application 350, the webserver application 355, or a combination thereof. For example, the HTML with JS interface application 350 may access a library to obtain a HTML with JS interface to further encrypt or transform the data.

As noted herein, converting the industrial data (e.g., the VNC industrial data) into WebSocket industrial data may facilitate (or otherwise result in) the encryption of the industrial data. As such, in some examples, the encryption performed by the universal VNC viewer solution may leverage modern web standards to provide secure remote access of data, while maintaining compatibility with lower-power devices and support for layerization or containerization.

Although FIG. 3 is described with respect to data (or data packets) flowing from the industrial device 152 to the user device 110, in some configurations, data (or data packets) may be transmitted from the user device 110 to the industrial device 152 by implementing similar translations or transformations between the various protocols (e.g., VNC, WebSocket, HTML, etc.) in a different sequence or order (e.g., in reverse).

As noted herein, in some instances, the universal VNC viewer solution may be implemented at the computing device 115 (e.g., the VNC to WebSocket interface 305, the WebSocket to HTML interface 335, etc., as illustrated in FIG. 3). Alternatively, or in addition, in some instances, the universal VNC viewer solution may be implemented at one of the industiral devices 152 of the industrial system 105 (e.g., such as when the computing device 115 is a component of the industrial system 105(i.e., one of the industrial devices 152 of the industrial system 105)).

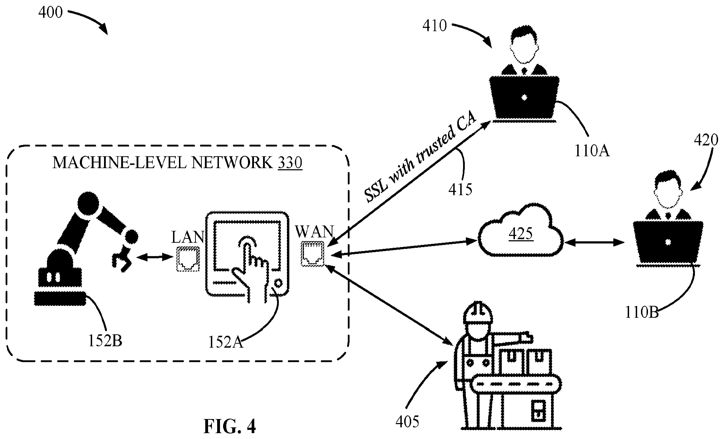

For example, FIG. 4 illustrates an example workflow diagram 400 when the universal VNC viewer solution is implemented at one of the industrial devices 152 of the industrial system 105 in accordance with some configurations. For instance, as illustrated in FIG. 4, the universal VNC viewer solution may be implemented at a first industrial device 152A (illustrated as an HMI or HMI panel in FIG. 4). In the illustrated example, the first industrial device 152A may communicate with a second industrial device 152 (e.g., via a LAN connection). Accordingly, in some configurations, the second industrial device 152 may provide data (or data packets) to the first industrial device 152A (e.g., the universal VNC viewer solution provided thereby) (as VNC protocol or industrial data). In the example of FIG. 4, the first industrial device 152A may facilitate (or otherwise implement) a layered architecture such that data may be translated (or otherwise transformed) between various protocols (e.g., VNC, WebSocket, HTML, etc.), as described herein.

As illustrated in the example of FIG. 4, the universal VNC viewer solution may allow various users to interact with (or remotely access) the industrial data (or corresponding data packets). As one example, a line operator 405 (e.g., a user operating the industrial system 105, who is physically present on a manufacturing floor and has physical access to a panel associated with the industrial system 105 (e.g., the first computing device 152A)) may access the industrial data. As another example, a line supervisor 410 can remotely access both an interface or panel of the industrial system 105 (e.g., the first industrial device 152A) and other equipment of the industrial system 105 using a first user device 110A (e.g., one instance of the user device 110 of FIG. 1) over an on-premises network 415 (e.g., using a SSL with a certificate authority (CA)). As yet another example, a remote technician 420 can securely (and remotely) access the industrial system 105 (or the industrial device(s) 152 thereof) using a second user device 110B (e.g., as one instance of the user device 110 of FIG. 1) via a communication connection 425 that may implement a remote access protocol (e.g., a cloud-based, a virtual private network (VPN) based, or a web-based remote access application).

As such, in some configurations, the universal VNC solution may be integrated with pre-existing components of the industrial system 105 (e.g., at a pre-existing industrial device), such as, e.g., an HMI or HMI panel, as illustrated in the example of FIG. 4. Alternatively, or in addition, in some configurations, the universal VNC solution may be implemented using a separate component of the industrial system 105 (e.g., by adding the computing device 115 to the industrial system 105).

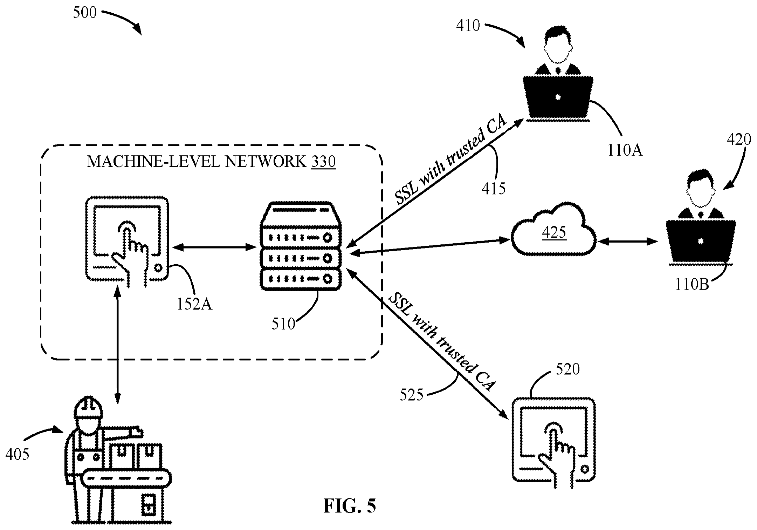

For example, FIG. 5 illustrates the computing device 115, which may implement the universal VNC viewer solution described herein, as an additional component or device of the industrial system 105. For instance, the computing device 115 may be included as a component of the machine-level network 330. In the example of FIG. 5, the computing device 115 may be a server device (e.g., a virtual server device), an industrial PC, etc. In the example, of FIG. 5, the computing device 115 may receive data (or data packets) (e.g., the industrial data) from the industrial device 152 (illustrated as an HMI or HMI panel). Upon receipt of the data, the computing device 115 may implement the universal VNC viewer solution described herein to facilitate (or otherwise provide) secure remote access to the industrial system 105. In the illustrated example of FIG. 5, the line operator 405 may access the industrial system 105 through the industrial device 152, the line supervisor 410 may access the industrial system 105 via the on-premises network 415, and the remote technician 420 may access the industrial system 105 via the cloud-based communication connection 425. Alternatively, or in addition, as illustrated in FIG. 5, any device (represented in FIG. 5 by reference numeral 520) with a web browser, where an SSL with CA may be loaded, may be utilized to securely and remotely access (or otherwise interact with) the industrial system 105 (represented in FIG. 5 by reference numeral 525).

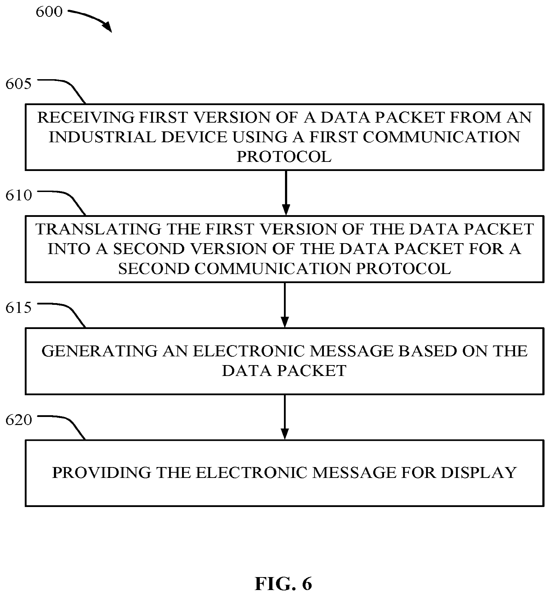

FIG. 6 is a flowchart illustrating a method 600 of providing remote access to industrial devices of industrial systems network security for the industrial system 105 (e.g., the industrial device(s) 152 of the industrial system 105) according to some configurations. The method 600 is described as being performed by the computing device 115 and, in particular, the electronic processor(s) 200 of the computing device 115. However, as noted herein, the functionality described with respect to the method 600 may be performed by other devices, such as, e.g., the industrial device(s) 152, distributed among a plurality of devices, or a combination thereof.

As illustrated in FIG. 6, the method 600 may include receiving, with the electronic processor 200, a first version of a data packet from the industrial device 152 using a first communication protocol of the industrial device 152 (at block 605). In some configurations, the first version of the data packet may be in a format of the first communication protocol (e.g., formatted in accordance with the first communication protocol). As one example, in some instances, the first communication protocol may be a VNC communication protocol. As such, in some instances, the electronic processor 200 may receive VNC industrial data from the industrial device 152 (e.g., as the first version of the data packet from the industrial device 152). As described herein, in some instances, the industrial device 152 may be compatible with VNC implementations. As such, in some instances, the industrial device 152 communicates data or information (e.g., the industrial data) in accordance with the VNC communication protocol. Accordingly, in some instances, the first communication protocol may be specific to (or otherwise based on) the industrial device 152.

For example, as described herein with reference to FIG. 3, the electronic processor 200 may receive the VNC industrial data (e.g., the first version of the data packet) from the industrial device 152 over a communication network or connection that is insecure or unencrypted (e.g., the first communication network 310 of FIG. 3). In such instances, the communication network that communicatively couples the electronic processor 200 to the industrial device 152 may be an insecure or unencrypted network (e.g., the machine-level network 330 of FIG. 3). As such, in some configurations, the electronic processor 200 may receive the first version of the data packet (as unencrypted) from the industrial device 152 over a closed network (e.g., a network that has restricted access) or a network that is physically isolated from other components.

The electronic processor 200 may translate the first version of the data packet into a second version of the data packet for a second communication protocol (at block 610). In some examples, the second version of the data packet is in a second communication protocol that is different from the first communication protocol. For example, the second communication protocol may be a bidirectional communication protocol (or a full-duplex communication protocol). As one specific example, the second communication protocol may be a WebSocket protocol. In some instances, the electronic processor 200 may translate the first version of the data packet into the second version of the data packet for the second communication protocol via, e.g., the WebSocket server application 320, the WebSocket client application 345, or a combination thereof of FIG. 3.

In some configurations, by translating the first version of the data packet into the second version of the data packet, various encryption and security features may be implemented. For example, the second version of the data packet may be an encrypted version of the data packet (e.g., while the first version of the data packet may be an unencrypted version of the data packet).

In some configurations, the electronic processor 200 may implement one or more additional translations (or transformations, conversions, etc.). For example, with reference to FIG. 3, in some examples, the electronic processor 200 may convert the second version of the data packet (e.g., a WebSocket version of the data packet) to be compatible (or otherwise formatted) with a third communication protocol, such as, e.g., a presentation protocol. As one specific example, the electronic processor 200 may convert the second version of the data packet (e.g., the WebSocket version) into a third version of the data packet such that the third version of the data packet is formatted in accordance with an HTML format, such as, e.g., an HTML with JavaScript interface (e.g., via the HTML with JavaScript interface application 350 of FIG. 3).

The electronic processor 200 may generate an electronic message based on the data packet (e.g., the second version, the third version, the nth version, etc.) (at block 615) and provide the electronic message for display (at block 620). In some examples, the electronic processor 200 may generate the electronic message based on the third version of the data packet (e.g., the HTML (or HTML with JavaScript interface) formatted version of the data packet). As such, in some configurations, the electronic message may be a webpage to be displayed via a web browser (e.g., via the display device 175 of the user device 110, a display of an industrial device, such as, e.g., an HMI, an HMI panel, or an industrial PC, etc.). Accordingly, in some configurations, the electronic message may be a user interface (or a graphical user interface (GUI)) to be displayed to a user of the universal VNC viewer solution via, e.g., the display device 175 of the user device 110, a display device of one of the industrial devices 152 (e.g., an HMI, an HMI panel, an industrial PC, etc.).

Accordingly, in some configurations, the electronic processor 200 may transmit (or otherwise provide) the electronic message to a display device for display (e.g., as a GUI, a web page via a web browser, etc.). In some examples, the electronic message may be transmitted to the display device (or a device thereof) using a cryptographic protocol, such as, e.g., SSL, SSL with CA, transport layer security (TLS), etc. (e.g., such as the communication connection 415 of FIGS. 4-5, the communication connection 525 of FIG. 5, etc.). In some examples, the electronic message may be provided to the display device using a cloud-based network (or connection thereof) that provides secure remote access, such as, e.g., the communication connection 425 of FIGS. 4-5.

What has been described above includes examples of the disclosed technology. It is, of course, not possible to describe every conceivable combination of components or methodologies for purposes of describing the disclosed technology, but one of ordinary skill in the art may recognize that many further combinations and permutations of the disclosed technology are possible. Accordingly, the disclosed technology is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed technology. In this regard, it will also be recognized that the disclosed technology includes a system as well as a computer-readable medium having computer-executable instructions for performing the acts and/or events of the various methods of the disclosed technology.

In addition, while a particular feature of the disclosed technology may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."
The following is a list of further preferred embodiments of the invention:
1. An industrial system with remote access, the industrial system comprising:
   an industrial device of the industrial system, the industrial device configured to perform functionality related to a process to be executed by the industrial system; and
   a computing device communicatively coupled to the industrial device, the computing device including an electronic processor configured to:
      receive a first version of a data packet from the industrial device using a first communication protocol of the industrial device, wherein the first version of the data packet is in a first format of the first communication protocol;
      translate the first version of the data packet into a second version of the data packet, wherein the second version of the data packet is in a second format of a second communication protocol, the second communication protocol different from the first communication protocol;
      generate an electronic message based on the second version of the data packet; and
      provide the electronic message to a display device for display.
2. The industrial system of embodiment 1, wherein the electronic processor is configured to:
   convert the second version of the data packet into a third version of the data packet, wherein the third version of the data packet is in a third format of a markup language.
3. The industrial system of embodiment 2, wherein the electronic message is a webpage to be displayed via the display device using web browser.
4. The industrial system of embodiment 1, wherein the computing device includes at least one of: a human-machine interface (HMI) or an industrial personal computer (PC).
5. The industrial system of embodiment 1, wherein the computing device is a pre-existing component of the industrial system.
6. The industrial system of embodiment 1, wherein the computing device is communicatively coupled to the industrial device via a closed network such that the data packet is received over the closed network.
7. The industrial system of embodiment 6, wherein the computing device is communicatively coupled to a remote device that includes the display device via an open network such that the electronic message is provided to the display device over the open network.
8. The industrial system of embodiment 1, wherein the second communication protocol facilitates full-duplex communication over a single transmission control protocol (TCP) connection.
9. The industrial system of embodiment 1, wherein the first communication protocol is a virtual network computing (VNC) protocol.
10. The industrial system of embodiment 1, wherein, when the data packet is in the first format, the data packet is not encrypted and wherein, when the data packet is in the second format, the data packet is encrypted.
11. A method for providing remote access to an industrial system, the method comprising:
   receiving, with an electronic processor, a first version of a data packet from an industrial device of the industrial system using a first communication protocol of the industrial device, wherein the first version of the data packet is formatted in accordance with the first communication protocol;
   translating, with the electronic processor, the first version of the data packet into a second version of the data packet, wherein the second version of the data packet is formatted in accordance with a second communication protocol;
   converting, with the electronic processor, the second version of the data packet into a third version of the data packet, wherein the third version of the data packet is formatted in accordance with a markup language protocol;
   generating, with the electronic processor, an electronic message based on the third version of the data packet; and
   providing, with the electronic processor, the electronic message to a display device for display.
12. The method of embodiment 11, wherein converting, with the electronic processor, the second version of the data packet into the third version of the data packet includes converting the second version of the data packet into hypertext markup language (HTML) with JavaScript interface.
13. The method of embodiment 11, wherein translating, with the electronic processor, the first version of the data packet into the second version of the data packet includes translating the first version of the data packet into the second version of the data packet, wherein the second version of the data packet is formatted in accordance with a communication protocol that provides full-duplex communication.
14. The method of embodiment 11, wherein receiving, with the electronic processor, the first version of the data packet includes receiving the first version of the data packet using a virtual network computing (VNC) protocol.
15. The method of embodiment 11, wherein generating, with the electronic processor, the electronic message includes:
   generating, with the electronic processor, a graphical user interface (GUI) based on the third version of the data packet, wherein the GUI indicates information related to the industrial system based on a payload of the data packet, and wherein the GUI is displayed via the display device.
16. The method of embodiment 11, wherein providing, with the electronic processor, the electronic message includes:
   transmitting, with the electronic processor, over a secure network connection using a cryptographic protocol, the electronic message to a remote computing device that is at a remote location from the industrial system.
17. The method of embodiment 11, wherein providing, with the electronic processor, the electronic message to the display device for display includes:
   transmitting, with the electronic processor, the electronic message to a web server, wherein the web server is configured to facilitate display of the electronic message as a web page via a web browser.
18. The method of embodiment 11, wherein providing, with the electronic processor, the electronic message to the display device includes providing, with the electronic processor, the electronic message using an on-premises network of a facility that includes the industrial system, wherein the display device and the electronic processor are connected to the on-premise network.
19. The method of embodiment 11, wherein providing, with the electronic processor, the electronic message to the display device for display includes providing, with the electronic processor, the electronic message to a remote device that includes the display device over a cloud-based network that provides secure remote access.
20. A non-transitory, computer-readable medium storing instructions that, when executed by an electronic processor, perform a set of functions, the set of functions comprising:
   receiving a first version of a data packet from an industrial device of an industrial system using a virtual computing network (VNC) protocol of the industrial device, wherein the first version of the data packet is formatted in accordance with the VNC protocol, wherein the data packet includes information related to the industrial system;
   translating the first version of the data packet into a second version of the data packet, wherein the second version of the data packet is formatted in accordance with a real-time communication protocol;
   converting the second version of the data packet into a third version of the data packet, wherein the third version of the data packet is formatted in accordance with a markup language;
   generating, with the electronic processor, a graphical user interface (GUI) based on the third version of the data packet, wherein the GUI indicates the information related to the industrial system; and
   providing, with the electronic processor, the GUI for display via a display device.

## Claims

1. An industrial system with remote access, the industrial system comprising:
an industrial device of the industrial system, the industrial device configured to perform functionality related to a process to be executed by the industrial system; and
a computing device communicatively coupled to the industrial device, the computing device including an electronic processor configured to:
receive a first version of a data packet from the industrial device using a first communication protocol of the industrial device, wherein the first version of the data packet is in a first format of the first communication protocol;
translate the first version of the data packet into a second version of the data packet, wherein the second version of the data packet is in a second format of a second communication protocol, the second communication protocol different from the first communication protocol;
generate an electronic message based on the second version of the data packet; and
provide the electronic message to a display device for display.

2. The industrial system of claim 1, wherein the electronic processor is configured to:
convert the second version of the data packet into a third version of the data packet, wherein the third version of the data packet is in a third format of a markup language.

3. The industrial system of claim 2, wherein the electronic message is a webpage to be displayed via the display device using web browser.

4. The industrial system of one of claims 1 to 3, wherein the computing device includes at least one of: a human-machine interface (HMI) or an industrial personal computer (PC).

5. The industrial system of one of claims 1 to 4, wherein the computing device is a pre-existing component of the industrial system.

6. The industrial system of one of claims 1 to 5, wherein the computing device is communicatively coupled to the industrial device via a closed network such that the data packet is received over the closed network.

7. The industrial system of claim 6, wherein the computing device is communicatively coupled to a remote device that includes the display device via an open network such that the electronic message is provided to the display device over the open network.

8. The industrial system of one of claims 1 to 7, wherein the second communication protocol facilitates full-duplex communication over a single transmission control protocol (TCP) connection.

9. The industrial system of one of claims 1 to 8, wherein the first communication protocol is a virtual network computing (VNC) protocol.

10. The industrial system of one of claims 1 to 9, wherein, when the data packet is in the first format, the data packet is not encrypted and wherein, when the data packet is in the second format, the data packet is encrypted.

11. A method for providing remote access to an industrial system, the method comprising:
receiving, with an electronic processor, a first version of a data packet from an industrial device of the industrial system using a first communication protocol of the industrial device, wherein the first version of the data packet is formatted in accordance with the first communication protocol;
translating, with the electronic processor, the first version of the data packet into a second version of the data packet, wherein the second version of the data packet is formatted in accordance with a second communication protocol;
converting, with the electronic processor, the second version of the data packet into a third version of the data packet, wherein the third version of the data packet is formatted in accordance with a markup language protocol;
generating, with the electronic processor, an electronic message based on the third version of the data packet; and
providing, with the electronic processor, the electronic message to a display device for display.

12. The method of claim 11, wherein converting, with the electronic processor, the second version of the data packet into the third version of the data packet includes converting the second version of the data packet into hypertext markup language (HTML) with JavaScript interface.

13. The method of one of claims 11 or 12, wherein translating, with the electronic processor, the first version of the data packet into the second version of the data packet includes translating the first version of the data packet into the second version of the data packet, wherein the second version of the data packet is formatted in accordance with a communication protocol that provides full-duplex communication.

14. The method of one of claims 11 to 13, wherein receiving, with the electronic processor, the first version of the data packet includes receiving the first version of the data packet using a virtual network computing (VNC) protocol, or
wherein generating, with the electronic processor, the electronic message includes:
generating, with the electronic processor, a graphical user interface (GUI) based on the third version of the data packet, wherein the GUI indicates information related to the industrial system based on a payload of the data packet, and wherein the GUI is displayed via the display device, or
wherein providing, with the electronic processor, the electronic message includes:
transmitting, with the electronic processor, over a secure network connection using a cryptographic protocol, the electronic message to a remote computing device that is at a remote location from the industrial system, or
wherein providing, with the electronic processor, the electronic message to the display device for display includes:
transmitting, with the electronic processor, the electronic message to a web server, wherein the web server is configured to facilitate display of the electronic message as a web page via a web browser, or
wherein providing, with the electronic processor, the electronic message to the display device includes providing, with the electronic processor, the electronic message using an on-premises network of a facility that includes the industrial system, wherein the display device and the electronic processor are connected to the on-premise network, or
wherein providing, with the electronic processor, the electronic message to the display device for display includes providing, with the electronic processor, the electronic message to a remote device that includes the display device over a cloud-based network that provides secure remote access.

15. A non-transitory, computer-readable medium storing instructions that, when executed by an electronic processor, perform a set of functions, the set of functions comprising:
receiving a first version of a data packet from an industrial device of an industrial system using a virtual computing network (VNC) protocol of the industrial device, wherein the first version of the data packet is formatted in accordance with the VNC protocol, wherein the data packet includes information related to the industrial system;
translating the first version of the data packet into a second version of the data packet, wherein the second version of the data packet is formatted in accordance with a real-time communication protocol;
converting the second version of the data packet into a third version of the data packet, wherein the third version of the data packet is formatted in accordance with a markup language;
generating, with the electronic processor, a graphical user interface (GUI) based on the third version of the data packet, wherein the GUI indicates the information related to the industrial system; and
providing, with the electronic processor, the GUI for display via a display device.
